# EUROPÄISCHE PATENTSCHRIFT

(11) **EP 0 561 055 B1**
(45) Veröffentlichungstag und Bekanntmachung des Hinweises auf die Patenterteilung: **21.08.1996**
(21) Anmeldenummer: 92121121.5
(22) Anmeldetag: 11.12.1992
(51) Int. Cl.: B60N 3/04

(54) **Befestigungselement zur Halterung von Matten**
Fastener for mats
Elément de fixation pour mattes

(30) Priorität: 14.02.1992 DE 4204410
(43) Veröffentlichungstag der Anmeldung: 22.09.1993
(73) Patentinhaber: fischerwerke Artur Fischer GmbH & Co. KG, D-72178 Waldachtal (DE); Bayerische Motoren Werke Aktiengesellschaft, 80788 München (DE)
(72) Erfinder: Wilfried, Weber, Dipl.-Ing. (FH), W-7294 Schopfloch-Unteriflingen (DE); Weitbrecht, Winfried, D-80935 München (DE); Kuchenbauer, Herbert, D-81737 München (DE)

(56) Entgegenhaltungen:
- EP-A- 0 311 736
- WO-A-84/04898
- DE-A- 2 553 599
- DE-A- 3 934 462
- US-A- 4 361 610
- US-A- 4 748 063
- US-A- 4 878 792
- US-A- 5 003 664

## Beschreibung

Die Erfindung betrifft ein Befestigungselement zur Halterung von Matten, insbesondere Bodenmatten in Fahrzeugen, gemäß der Gattung des Anspruches 1.

Aus der US-A 4 878 792 ist ein derartiges Befestigungselement bekannt. Dieses weist ein in einen Fahrzeugboden einschraubbares Unterteil auf, mit dem ein Oberteil durch eine Schnappverbindung lösbar verbindbar ist. Das Oberteil ist zweiteilig ausgebildet. Es greift durch eine Öse einer Bodenmatte hindurch und hält die Bodenmatte zwischen einem Doppelflansch. Das bekannte Befestigungselement hat den Nachteil, daß mehrere Befestigungselemente für jede Bodenmatte deckungsgleich am Fahrzeugboden und der Bodenmatte angebracht werden müssen. Weiterer Nachteil ist, daß beim Einlegen der Bodenmatte diese genau passend zum Fahrzeugboden ausgerichtet werden muß, um die Ober- und Unterteile miteinander verbinden zu können. Hinzu kommt, daß ein Zapfen des im Fahrzeugboden verankerten Unterteils, der Teil der Schnappverbindung ist, nach oben vom Fahrzeugboden vorsteht, wenn die Matte nicht aufgelegt ist. Dies ist zum einen störend bei Benutzung des Fahrzeugs ohne Bodenmatte. Des weiteren kann der Zapfen von den Füßen der Insassen unbeabsichtigt abgebrochen werden.

Aus der US-A 5 003 664 ist es bekannt, eine Bodenmatte mittels Klettverschluß am Fahrzeugboden anzubringen. Dies hat jedoch den Nachteil, daß Klettverschluß sehr schmutzempfindlich ist. Insbesondere Hakenelemente des Klettverschlusses, aber auch seine Schlingen setzen sich während der Benutzungsdauer mit Schmutz zu, der sich nicht mehr vollständig entfernen läßt, und verhaken nicht mehr miteinander. Des weiteren werden die Schlingen und die Hakenelemente durch die Füße der Fahrzeuginsassen flach gedrückt. Die Hakenelemente werden durch oftmaliges Öffnen des Klettverschlusses beim Herausnehmen der Bodenmatte aus dem Fahrzeug plastisch aufgebogen und Schlingen reißen auf. Auch Dadurch vermindert sich die Verbindungskraft des Klettverschlusses während der Nutzungsdauer des Fahrzeugs.

Der Erfindung liegt die Aufgabe zugrunde, ein Befestigungselement zur Halterung von Matten, insbesondere Bodenmatten in Fahrzeugen, zu schaffen, das robust und schmutzunempfindlich ist sowie ein häufiges Lösen und Wiederbefestigen von Matten zuläßt.

Die Lösung dieser Aufgabe wird durch die im Anspruch 1 angegebenen Merkmale erreicht.

Ober- und Unterteil des Befestigungselementes werden getrennt montiert, wobei das Unterteil im Boden des Fahrzeuges verankert und das Oberteil über eine Klemmeinrichtung an der Matte befestigt wird. Durch Zusammendrücken der beiden Kupplungsflächen des Ober- und Unterteiles kommen die an beiden Flächen angeordneten Kupplungselemente zum Eingriff und bewirken die Verbindung und Halterung der Matte auf der Bodenfläche des Fahrzeuges. Da auf den Kupplungsflächen eine Vielzahl von Kupplungselementen angeordnet sind, ist eine ausreichende Verbindung auch dann gewährleistet, wenn die beiden Kupplungsflächen nicht deckungsgleich aufeinanderliegen. Somit ist stets eine faltfreie Halterung der Matte möglich.

Zum Entfernen der Matte werden Ober- und Unterteil auseinandergezogen, wobei das im Boden eingesetzte Unterteil verankert im Boden verbleibt. Durch die einmalige Verankerung des Unterteils sind zum einen gleichbleibend hohe Verankerungswerte sichergestellt, und zum anderen eine erhebliche Vereinfachung des Entfernens der Matte erreicht.

Sowohl Unter- als auch Oberteil des Befestigungselementes mit ihren Kupplungsflächen und Kupplungselementen sind jeweils aus einem Stück im Spritzgußverfahren hergestellt, wobei die Kupplungselemente als Stifte ausgebildet sind. In einer beispielsweise im Spritzgußwerkzeug in einer Wechselstation integrierten Vorrichtung werden mit einem beheizten Umformstempel die Stiftköpfe ausgebildet. Die einstückig mit den Kupplungsflächen gebildeten Kupplungselemente sind damit sehr robust und können durch entsprechende Dicke der Kupplungselemente und Größe der Köpfe den jeweiligen Anforderungen angepaßt werden.

Um das Zusammenklipsen zu erleichtern, ist es zweckmäßig, die Kupplungselemente in einer Richtung paarweise in Streifen mit einem etwa dem Stiftkopf entsprechenden Abstand und zwischen den Streifen mit einem etwa der doppelten Dicke des Stiftkopfes entsprechenden Abstand anzuordnen.

Speziell für die Verankerung des Befestigungselementes in dem mit einem Hartschaum belegten Boden des Fahrzeuges kann das Unterteil mit einem Schaft versehen sein, der ein Gewinde mit in Richtung Flansch zunehmender Gewindehöhe aufweist. Zum Eindrehen des Unterteiles in den Boden des Fahrzeuges ist im Zentrum des Flansches des Unterteiles ein Innensechskant eingearbeitet. Um beim Zusammenklipsen der beiden Teile eine ausreichende Überdeckung sicherzustellen, kann der Flansch des Oberteiles einen größeren Durchmesser als der Flansch des Unterteiles aufweisen.

Die Verbindung des Oberteiles mit der Matte erfolgt zweckmäßigerweise über eine Klemmeinrichtung, die durch einen zentrisch am Oberteil angeordneten hülsenförmigen Ansatz mit einer umlaufenden Innenrippe im Bereich seiner Stirnseite gebildet ist. In diesen Ansatz wird ein Spannteil für die Matte mit einem Außenrippen aufweisenden Verriegelungszapfen eingedrückt. Mit einer solchen Klemmeinrichtung ist es möglich, das Befestigungselement für unterschiedliche Dicken von Matten zu verwenden.

In der Zeichnung ist ein Ausführungsbeispiel der Erfindung dargestellt.

Es zeigen:
- Figur 1: das Befestigungselement mit zusammengefügtem Ober- und Unterteil im Schnitt und
- Figur 2: eine Draufsicht auf die Kupplungsfläche des Unterteiles.

Das Befestigungselement besteht aus einem Oberteil 1, das über eine Klemmeinrichtung 2 mit einer Matte 3 verbunden ist, und einem Unterteil 4, das im Boden 5, beispielsweise eines Fahrzeuges, verankert ist. Sowohl Ober- als auch Unterteil sind mit einem scheibenförmigen Flansch 6, 7 ausgestattet, deren zueinanderweisenden Kupplungsflächen 8, 9 mit Kupplungselementen 10 versehen sind. Diese Kupplungselemente 10 sind als Stifte ausgebildet, die einen halbrundförmigen, den Stift allseitig radial überragenden Kopf 11 aufweisen.

Der Schaft 12 des Unterteiles 4 ist zum Einschrauben in den aus Hartschaum bestehen den Boden 5 mit einem großflächigen Gewinde 13 versehen, wobei zur Erzielung höherer Haltewerte im Hartschaum die Gewindehöhe in Richtung Flansch 7 des Unterteiles 4 zunimmt. Zum Eindrehen des Unterteiles 4 ist im Zentrum des Flansches 7 ein Innensechskant 14 eingearbeitet.

Zur Verbindung des Oberteiles 1 mit der Matte 3 wird der auf der Rückseite des Flansches 6 angeordnete hülsenförmige Ansatz 15 durch eine entsprechende Öse der Matte 3 gesteckt. Die Befestigung des Oberteiles 1 an der Matte 3 erfolgt über ein Spannteil 16, das in die mit einer Innenrippe 17 versehene Bohrung 18 des Ansatzes 15 eingreift. Zur Halterung ist das Spannteil 16 mit einem Verriegelungszapfen 19 versehen, der mehrere umlaufende Außenrippen 20 aufweist. Im dargestellten Ausführungsbeispiel ist die dünnstmögliche Matte verspannt. Ist die Matte etwas dicker, kommt eine der nachfolgenden Außenrippen 20 des Verriegelungszapfens 19 zum Eingriff mit der Innenrippe 17.

Zur Halterung der Matte wird das Oberteil 1 mit seiner Kupplungfläche 8 auf die Kupplungsfläche 9 des Unterteiles aufgedrückt. Dabei verhaken sich die Köpfe 11 der Kupplungselemente 10 gegenseitig, so daß eine zugaufnehmende Verbindung zwischen Ober- und Unterteil entsteht. Um eine vollständige Überdeckung des Unterteiles 4 bei der Verbindung sicherzustellen, ist der Flansch 6 des Oberteiles 1 im Durchmesser etwa im Verhältnis von 10 : 6 größer ausgeführt.

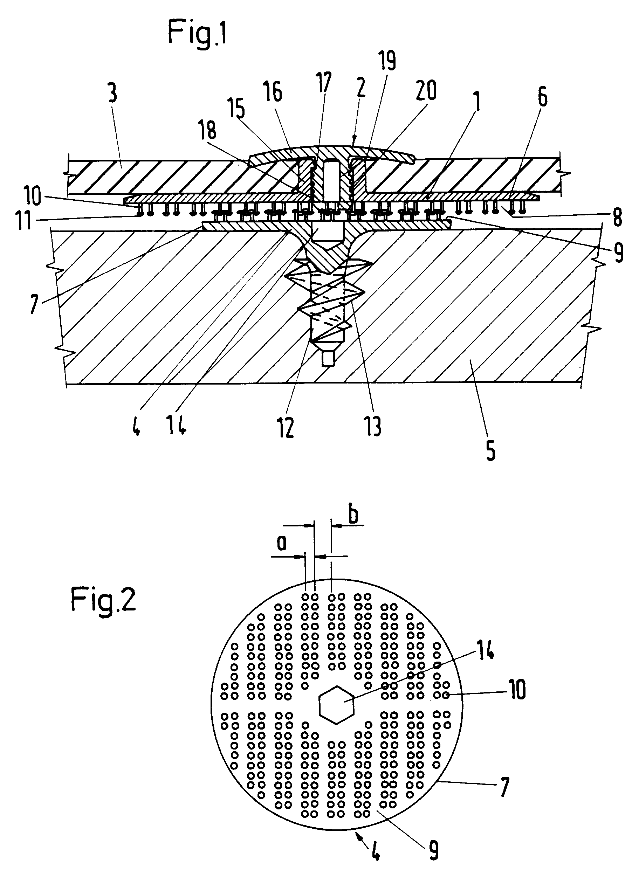

In der Draufsicht auf die Kupplungsfläche 9 des Unterteiles 4 gemäß Figur 2 ist eine besondere Anordnung der Kupplungselemente 10 erkennbar. Um das Einklipsen zu erleichtern, sind die Kupplungselemente 10 in einer Richtung paarweise in Streifen mit einem etwa dem Stiftkopf 11 entsprechenden Abstand (a) angeordnet. Zwischen den Streifen besteht jeweils ein Abstand (b), der etwa der doppelten Dicke eines Stiftkopfes 11 entspricht.

Das Befestigungselement mit seinem Ober- und Unterteil ist im Spritzgußverfahren herstellbar. Die auf den Kupplungsflächen angeordneten Kupplungselemente werden im Spritzgießen als Stifte angeformt. In einem separaten Arbeitsgang mit einer ggf. im Spritzgußwerkzeug auf einer Drehplatte integrierten Vorrichtung werden mit einem beheizten Umformstempel die Köpfe 11 der Kupplungselemente 10 ausgebildet. Damit entstehen sehr widerstandsfähige, hakenartige Kupplungselemente, die durch Ineinanderrasten der Kupplungselemente eine Verbindung zwischen Ober- und Unterteil des Befestigungselementes ermöglichen.

## Patentansprüche

1. Befestigungselement zur Halterung von Matten (3), insbesondere Bodenmatten in Fahrzeugen, bestehend aus einem in einer Mattenauflage (5) verankerbaren Unterteil (4) und einem mit dem Unterteil (4) lösbar verbindbaren Oberteil (1), das über eine Klemmeinrichtung (2) mit der Matte (3) verbunden ist, wobei das Oberteil (1) und das Unterteil (4) jeweils einen scheibenförmigen Flansch (6, 7) aufweisen, **dadurch gekennzeichnet**, daß die beiden Flansche (6, 7) auf ihrer zueinander weisenden Kupplungsfläche (8, 9) mit einer Vielzahl von gleichförmigen und durch gegenseitiges Verhaken zusammenwirkenden Kupplungselementen (10) versehen sind, die als die Kupplungsfläche (8, 9) überragende Stifte mit den Stift allseitig radial überragenden Köpfen (11) ausgebildet sind.

2. Befestigungselement nach Anspruch 1, **dadurch gekennzeichnet**, daß die Köpfe (11) halbrund-förmig sind.

3. Befestigungselement nach Anspruch 1, **dadurch gekennzeichnet**, daß die Kupplungselemente (10) in einer Richtung paarweise in Streifen mit einem etwa dem Kopf (11) entsprechenden Abstand (a) angeordnet sind, und daß zwischen den Streifen ein Abstand (b) besteht, der etwa der doppelten Dicke eines Kopfes (11) entspricht.

4. Befestigungselement nach Anspruch 1, **dadurch gekennzeichnet**, daß das Unterteil (4) mit einem Schaft (12) versehen ist, der ein Gewinde (13) mit in Richtung seines Flansches (7) zunehmender Gewindehöhe aufweist.

5. Befestigungselement nach Anspruch 1, **dadurch gekennzeichnet**, daß im Zentrum des Flansches (7) des Unterteiles (4) ein Innensechskant (14) eingearbeitet ist.

6. Befestigungselement nach Anspruch 1, **dadurch gekennzeichnet**, daß der Flansch (6) des Oberteiles (1) einen größeren Durchmesser aufweist als der Flansch (7) des Unterteiles (4).

7. Befestigungselement nach Anspruch 1, **dadurch gekennzeichnet**, daß die Klemmeinrichtung (2) des Oberteiles (1) durch einen zentrisch angeordneten hülsenförmigen Ansatz (15) mit einer umlaufenden Innenrippe (17) im Bereich seiner Stirnseite gebildet ist, in dem ein Spannteil (16) für die Matte (3) mit einem Außenrippen (20) aufweisenden Verriegelungszapfen (19) eingreift.

8. Befestigungselement nach Anspruch 1, **dadurch gekennzeichnet**, daß das Ober- und Unterteil aus Kunststoff im Spritzgußverfahren hergestellt und die Köpfe (11) der Kupplungselemente (10) durch einen beheizten Umformstempel gebildet sind.

## Claims

1. Fixing element for fixing mats (3), in particular floor mats in vehicles, consisting of a bottom part (4) anchorable in a mat support (5) and a top part (1) releasably joined to the bottom part (4), which top part is joined to the mat (3) by way of a clamping device (2), the top part (1) and the bottom part (4) each having a disc-shaped flange (6, 7), characterized in that the two flanges (6, 7) are provided on their coupling face (8, 9) facing towards one another with a plurality of identical coupling elements (10) which co-operate through interlocking, the coupling elements being in the form of pins projecting beyond the coupling face (8, 9) and having heads (11) projecting radially on all sides beyond the pin.

2. A fixing element according to claim 1, characterized in that the heads (11) are round.

3. A fixing element according to claim 1, characterized in that the coupling elements (10) are arranged in one direction in pairs in lines at a distance (**a**) apart corresponding approximately to the head (11), and between the lines there is a distance (**b**) which corresponds approximately to twice the thickness of one head (11).

4. A fixing element according to claim 1, characterized in that the bottom part (4) is provided with a shank (12) which has a thread (13) with a thread depth that increases towards its flange (7).

5. A fixing element according to claim 1, characterized in that a hexagon socket (14) is provided in the centre of the flange (7) of the bottom part (4).

6. A fixing element according to claim 1, characterized in that the flange (6) of the top part (1) had a larger diameter than the flange (7) of the bottom part (4).

7. A fixing element according to claim 1, characterized in that the clamping device (2) of the top part (1) is formed by a centrally arranged sleeve-like extension (15) with a circumferential internal rib (17) in the region of its end face, in which a clamping member (16) for the mat (3) engages with a locking peg (19) having external ribs (20).

8. A fixing element according to claim 1, characterized in that the top and bottom parts are manufactured from plastics material in an injection-moulding process and the heads (11) of the coupling elements (10) are formed by a heated forming punch.

## Revendications

1. Elément de fixation pour la retenue de paillassons (3), en particulier de tapis de sol dans des véhicules, comprenant une partie inférieure (4) pouvant être ancrée dans un support (5) de paillasson, et une partie supérieure (1) qui peut être reliée de manière libérable à la partie inférieure (4), et est reliée au tapis de sol (3) par l'intermédiaire d'un dispositif de coincement (2), la partie supérieure (1) et la partie inférieure (4) présentant respectivement une collerette discoïdale (6, 7), caractérisé par le fait que les deux collerettes (6, 7) sont munies, sur leurs surfaces d'accouplement (8, 9) tournées l'une vers l'autre, d'un grand nombre d'éléments d'accouplement (10) de formes identiques, coopérant par accrochage réciproque et réalisés sous la forme de plots qui dépassent au-delà de la surface d'accouplement (8, 9), et comportent des têtes (11) faisant saillie radialement, au-delà du plot, dans toutes les directions.

2. Elément de fixation selon la revendication 1, caractérisé par le fait que les têtes (11) sont de configuration semi-circulaire.

3. Elément de fixation selon la revendication 1, caractérisé par le fait que les éléments d'accouplement (10) sont agencés par paires dans une direction, sous la forme de bandes, avec un espacement (a) correspondant sensiblement à la tête (11) ; et par le fait que les bandes sont distantes d'un espacement (b) correspondant, sensiblement, au double de l'épaisseur d'une tête (11).

4. Elément de fixation selon la revendication 1, caractérisé par le fait que la partie inférieure (4) est pourvue d'un fût (12) présentant un filetage (13) d'une hauteur croissant en direction de sa collerette (7).

5. Elément de fixation selon la revendication 1, caractérisé par le fait qu'une creusure (14) à six pans est pratiquée au centre de la collerette (7) de la partie inférieure (4).

6. Elément de fixation selon la revendication 1, caractérisé par le fait que la collerette (6) de la partie supérieure (1) présente un plus grand diamètre que la collerette (7) de la partie inférieure (4).

7. Elément de fixation selon la revendication 1, caractérisé par le fait que le dispositif de coincement (2) de la partie supérieure (1) est formé par un appendice (15) en forme de douille, agencé centralement, doté d'une nervure intérieure périphérique (17) dans la région de sa face extrême, et dans lequel s'engage une pièce (16) de serrage du tapis de sol (3), munie d'un tenon de verrouillage (19) présentant des nervures extérieures (20).

8. Elément de fixation selon la revendication 1, caractérisé par le fait que les parties supérieure et inférieure sont fabriquées en une matière plastique par un procédé de moulage par injection, et les têtes (11) des éléments d'accouplement (10) sont façonnées par l'intermédiaire d'un poinçon chauffé de mise en forme.
